**Europäisches Patentamt**

**European Patent Office**

**Office européen des brevets**

(11) Veröffentlichungsnummer: **0 019 297**
**A2**

(12) **EUROPÄISCHE PATENTANMELDUNG**

(21) Anmeldenummer: **80102791.3**

(22) Anmeldetag: **20.05.80**

(51) Int. Cl.³: **F 22 B 3/04**

(30) Priorität: **22.05.79 DE 2920661**

(43) Veröffentlichungstag der Anmeldung:
**26.11.80 Patentblatt 80/24**

(84) Benannte Vertragsstaaten:
**AT BE CH DE FR GB IT LI NL SE**

(71) Anmelder: **Linde Aktiengesellschaft**
**Abraham-Lincoln-Strasse 21**
**D-6200 Wiesbaden(DE)**

(72) Erfinder: **Dworschak, Josef**
**Hauzenbergerstrasse 30**
**D-8000 München 21(DE)**

(74) Vertreter: **Schaefer, Gerhard, Dr.**
**Linde Aktiengesellschaft Zentrale Patentabteilung**
**D-8023 Höllriegelskreuth(DE)**

(54) **Verfahren und Vorrichtung zum Erzeugen von Dampf.**

(57) Die Erfindung betrifft ein Verfahren zur Erzeugung von Dampf mittels sensibler Niedertemperatur-Abwärme eines Fluids. Die in Verfahrensanlagen unterhalb etwa 150 °C anfallende Abwärme wird in der Regel verworfen, weil sie nicht in einfacher Art rekuperierbar ist, wenn in der Anlage, die die Abwärme liefert, keine Verbraucher für Abwärme tieferen Temperaturniveaus vorhanden sind. Um in einem Verfahren zur Erzeugung von Dampf sensible Niedertemperatur-Abwärme unterhalb des Temperaturniveaus des erzeugten Dampfes mit gutem Wirkungsgrad nutzen zu können, wird erfindungsgemäß unter erhöhtem Druck stehendes 19, durch Wärmetausch mit dem Fluid vorgewärmtes Speisewasser 14 in mehreren aufeinanderfolgenden Druckstufen 6, 7, 8, 9 entspannt, wobei der in jeder Stufe erzeugte Dampf gesättigt, auf den Druck der nächsthöheren Druckstufe komprimiert 32 und dem Dampf dieser Stufe zugeleitet wird.

Fig. 1

Verfahren zur Erzeugung von Dampf

Die Erfindung betrifft ein Verfahren zur Erzeugung von Dampf mittels sensibler Niedertemperatur-Abwärme eines Fluids.

Die in Verfahrensanlagen oberhalb etwa 150°C anfallende Abwärme wird heute schon weitgehend genutzt, und zwar zur Erzeugung von Niederdruckdampf. Die unterhalb dieses Temperaturniveaus anfallende Abwärme wird in der Regel verworfen, weil sie in der zuvor beschriebenen einfachen Art nicht rekuperierbar ist, wenn in der Anlage, die die Abwärme liefert, keine Verbraucher für Abwärme tieferen Temperaturniveaus vorhanden sind. Die direkte Nutzung der Abwärme für solche außerhalb der Anlage liegende Verbraucher ist meist recht schwierig und in den seltensten Fällen praktikabel.

Der Erfindung liegt daher die Aufgabe zugrunde, ein Verfahren zur Erzeugung von Dampf zu entwickeln, das mit gutem Wirkungsgrad die sensible Niedertemperatur-Abwärme unterhalb des Temperaturniveaus des erzeugten Dampfes nutzt.

Diese Aufgabe wird erfindungsgemäß dadurch gelöst, daß unter erhöhtem Druck stehendes, durch Wärmetausch mit dem Fluid vorgewärmtes Speisewasser in mehreren aufeinanderfolgenden Druckstufen entspannt wird, wobei der in jeder Stufe erzeugte Dampf gesättigt, auf den Druck der nächsthöheren Druckstufe komprimiert und dem Dampf dieser Stufe zugeleitet wird.

Auf diese Weise wird der Dampf sämtlicher Druckstufen auf den gewünschten Endzustand gebracht.

Der erfindungsgemäße Gedanke beruht dabei auf der Umkehrung des Verfahrens der regenerativen Speisewasservorwärmung in Dampfkraftanlagen. Dort wird in umgekehrter Weise Dampf auf mehrere Druckniveaus arbeitsleistend entspannt und gegen anzuwärmendes Speisewasser kondensiert.

Mit dem erfindungsgemäßen Verfahren gelingt es, die im Verlauf der Abkühlung eines Abwärmeträgers bei stetig absinkender Temperatur, also gleitend angebote Abwärme weitgehend zu nutzen und mit gutem exergetischem Wirkungsgrad auf ein im Mittel etwas höheres und annähernd isothermes Temperaturniveau zu heben, da der Wärmetausch bei der Speisewasser-Vorwärmung weitgehend verlustlos erfolgt.

So ist es beispielsweise möglich, den höherwertigen Anteil der in Verfahrensanlagen unterhalb von etwa $150\,^{\circ}C$ anfallenden Abwärme rückzugewinnen und in ein Niederdruckdampfnetz mit bestimmtem Druck- und Temperaturniveau einzubringen. Eine wesentliche Voraussetzung, die an eine wirtschaftliche Nutzung von Niedertemperatur-Abwärme gestellt werden muß, ist, daß durch die Abwärmenutzung zwei oder mehrere an sich unabhängige Anlagen möglichst nicht miteinander gekoppelt werden sollen.

Diese Bedingung wird durch das erfindungsgemäße Verfahren erfüllt, da - wie am Beispiel der Erzeugung von Dampf für ein Niederdruckdampfnetz gezeigt - die Abwärme nutzungsneutral angeboten wird. Es besteht zwar noch die Kopplung an die Wärme abgebende Anlage, jedoch kann ohne größeren Auf-

0019297

wand bei der endgültigen Außerbetriebsetzung der die Abwärme liefernden Anlage eine nach dem erfindungsgemäßen Verfahren arbeitende Anlage für andere Abwärme adaptiert werden.

Das vorgeschlagene Verfahren besitzt darüber hinaus weitere vorteilhafte Eigenschaften: Die nicht genutzte Abwärme kann an die Luft abgeführt werden. Dies ist wegen der sonst im allgemeinen hohen Aufwendungen für eine Wasserkühlung wirtschaftlich günstig. Außerdem hat eine nach dem erfindungsgemäßen Verfahren arbeitende Abwärmenutzungsanlage eine lange Nutzungsdauer, die von der Lebensdauer der die Abwärme liefernden und der die Abwärme nutzenden Anlage weitgehend unabhängig und insbesondere nicht von beiden Anlagen zugleich abhängig ist.

In einer vorteilhaften Ausgestaltung des Erfindungsgedankens wird das auf den niedrigsten Druck entspannte, nicht verdampfte Wasser wieder auf höheren Druck gebracht und nach Wärmetausch mit dem Fluid erneut entspannt. Diese Verfahrensweise eignet sich vor allem für die Nutzung der Abwärme bei der Abkühlung eines drucklos anfallenden Fluids. Auf diese Weise wird ein Teil des Wassers im Kreislauf geführt und nur die verdampfte Wassermenge ergänzt. Das Verhältnis der verdampften zu der im Kreislauf geführten Wassermenge beträgt beispielsweise 1 : 8. Vorzugsweise wird der Druck so gewählt, daß beim Wärmeaustausch noch keine Verdampfung stattfindet und das vorgewärmte Speisewasser wieder der höchsten Druckstufe zugeführt werden kann.

In einer anderen Variante des erfindungsgemäßen Verfahrens wird mit Vorteil das Wasser wenigstens zweier Druckstufen im Wärmetausch mit ungekühltem bzw. dem in einer vorausgegangenen Druckstufe höheren Druckes gekühlten Fluid erhitzt.

Diese Verfahrensweise ist hauptsächlich für unter Druck anfallende Fluid geeignet. Im Unterschied zur oben geschilderten Ausgestaltung wird hierbei das Wasser von wenigstens zwei, gegebenenfalls aller Druckstufen in Wärmetausch mit dem Fluid gebracht. So wird durchAbwärme das Wasser verschiedener Druckstufen direkt verdampft.

Bei dieser Verfahrensweise ist es nach einem Merkmal des Erfindungsgedankens zweckmäßig, der höchsten Druckstufe nur eine Wassermenge zuzuleiten, die der in allen Druckstufen erzeugten Dampfmenge entspricht.

Beim erfindungsgemäßen Verfahren wird der in jeder Druckstufe erzeugte Dampf auf den Druck der nächsthöheren Druckstufe komprimiert und dem Dampf dieser Stufe zugeleitet. Um die zur Verdichtung erforderliche Leistung möglichst klein zu halten, wird der Dampf vor einer Kompression gesättigt. Dies erfolgt in einer Ausgestaltung des vorgeschlagenen Verfahrens durch Einsprühen von Wasser, das beispielsweise von dem unter erhöhtem Druck stehenden Wasser vor dessen mehrstufiger Entspannung abgezweigt wird.

Es hat sich als vorteilhaft erwiesen, wenn die zur Kompression des in jeder Druckstufe anfallenden Dampfes dienenden Verdichter über eine gemeinsame Welle von einem Antrieb angetrieben werden. Dabei kann als Antrieb eine Gasturbine oder ein Dieselmotor dienen. Wird die Abwärme des Dieselmotors zur Erzeugung von Dampf und/oder vorgewärmtem Speisewasser für eine Druckstufe genutzt, kann der gute Wirkungsgrad des Verfahrens weiter verbessert werden.

Eine Vorrichtung zur Durchführung des Verfahrens enthält vorteilhafterweise mehrere Dampfkessel, wobei in einem Dampfkessel eine Zufuhrleitung und eine Dampfleitung münden, die übrigen Dampfkessel diesem Dampfkessel in Reihe

0019297

nachgeschaltet sind und benachbarte Dampfkessel über je einen Verdichter und eine Entspannungsvorrichtung miteinander verbunden sind.

Wird die vorgeschlagene Anlage in Verbindung mit einem Dampfnetz betrieben, ist die Zufuhrleitung die Kondensatschiene dieser Anlage, während die Dampfleitung in die Niederdruckdampfschiene mündet.

Zur Übertragung der Abwärme sind weiterhin eine oder mehrere Wärmetauschvorrichtungen mit Strömungsquerschnitten für Wasser und Fluid vorgesehen.

Bei einem unter Druck stehenden Fluid, dessen Wärme direkt in verschiedene Druckstufen eingebracht wird, dienen vorteilhafterweise die Dampfkessel selbst als Wärmetauschvorrichtungen. Dazu ist in in jedem Kessel im Bereich der Wasserfüllung ein Strömungsquerschnitt für das Fluid angeordnet. Da die Strömungsquerschnitte benachbarter Dampfkessel über Leitungen miteinander verbunden sind, durchströmt das Fluid unter kontinuierlicher Abkühlung die einzelnen Dampfkessel der Reihe nach.

Für die alternative Verfahrensweise, bei der ein Teil des Wassers im Kreislauf geführt wird, ist es von Vorteil, eine von den Dampfkesseln getrennte, innerhalb des Wasserkreislaufsystems angeordnete Wärmetauschereinheit vorzusehen. Diese Einheit besitzt dazu einen Strömungsquerschnitt für das Fluid und einen Strömungsquerschnitt für Wasser, dessen eines Ende über eine Pumpe mit dem Dampfkessel der untersten Druckstufe und dessen anderes Ende mit der Zufuhrleitung verbunden ist.

Als Antriebsaggregat für den Verdichter eignet sich besonders ein Dieselmotor mit hohem Wirkungsgrad, dessen Abwärzusätzlich weitgehend genutzt werden kann, in dem die Kühlung des Motors zur Speisewasservorwärmung genutzt wird. Dazu ist die Kühlwasserzulaufleitung des Motors an einen der Dampfkessel, der Wasser geeigneten Druckes und geeigneter Temperatur enthält, angeschlossen, während die Kühlwasserablaufleitung in einen Dampfkessel für Wasser höherer Temperatur mündet. Darüber hinaus ist es vorteilhaft, die Wärme der Motorabgase zu nutzen. Diese kann direkt zur Erzeugung von Dampf mit dem gewünschten Endzustand genutzt werden. Hierdurch wird der Wirkungsgrad des Verfahrens weiter verbessert.

Die vorgeschlagene Lösung kann auch als geschlossener Kreislauf mit Kondensator für den erzeugten Dampf und mit anderen Arbeitsmitteln als Wasser ausgeführt werden, ist also generell als Wärmepumpe bei gleitendem Abwärme- und isothermem Nutzwärmeniveau geeignet.

Im folgenden sollen anhand schematischer Skizzen zwei Varianten eines Ausführungsbeispieles der Erfindung beschrieben werden:

Es zeigen:

Figur 1          eine Skizze, die nur die wesentlichen Vorrichtungsteile enthält,

Figur 2          eine Darstellung des Verfahrensablaufes in einem T-s-Diagramm

Figur 3 u. 4    ein Ausführungsbeispiel

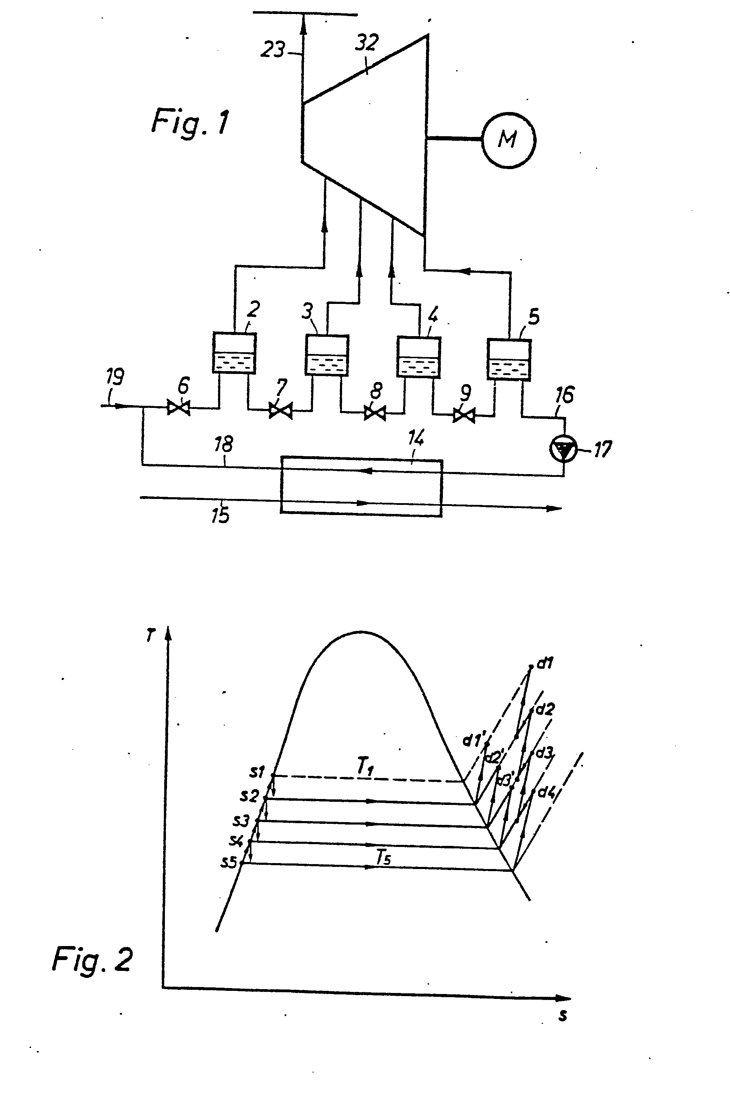

Anhand der Figur 1 können die wesentlichen Verfahrensschritte erläutert werden: Durch Leitung 19 tritt unter Druck stehendes Wasser nach Entspannung in einer Entspannungsvorrichtung, die im weiteren Ventil genannt wird, in einen ersten Dampfkessel 2, wobei ein Teil des Wassers verdampft. Das verbleibende, abgekühlte Wasser wird erneut in einem

0019297

Ventil 7 in einen weiteren Dampfkessel 3 entspannt. In gleicher Weise strömt Wasser über Ventile 8, 9 in Dampfkessel 4, 5. Über eine Leitung 16 tritt das Wasser aus dem Dampfkessel 5, in dem es den niedrigsten Druck besitzt, aus. Eine Pumpe 17 erhöht den Druck des Wasser wieder auf den in Leitung 19 herrschenden Druck, ehe das Wasser einem Wärmetauscher 14 zugeleitet und nach Austritt aus dem Wärmetauscher über eine Leitung 18 erneut in die Leitung 19 eingespeist wird. Im Wärmetauscher 14 findet die Erwärmung des Wassers gegen das über eine Leitung 15 in einen Strömungsquerschnitt des Wärmetauschers 14 eintretende abzukühlende Fluid statt. Der im Dampfkessel 5 erzeugte Dampf wird auf den Druck des Dampfes, der im Dampfkessel 4 erzeugt worden ist, komprimiert, mit dem Dampf des Dampfkessels 4 vermischt und auf den Druck des Dampfes komprimiert, der im Dampfkessel 3 herrscht usw. Auf diese Weise wird der gesamte Dampf, der in den Kesseln 2 bis 5 erzeugt worden ist, mittels der Verdichteranlage 32 auf das Druckniveau einer Dampfleitung 23 gehoben.

Diese Verfahrensschritte sind im Diagramm der Figur 2 dargestellt:

Wasser wird durch gleitende Abwärme im Wärmetauscher 14 vom Zustand s5 auf s1 angewärmt, wobei der abwärmeführende Strom im Idealfall von $T_1$ auf $T_2$ abgekühlt werden kann. Durch Entspannung des Wassers in der Stufe 2 erreicht es den Zustand s2, während die hierbei entstandene Teildampfmenge in der letzten Kompressorstufe gemeinsam mit bereits verdichtetem Dampf vom Zustand d2 auf den Endzustand d1 verdichtet wird. Durch weitere stufenweise Entspannung des Speisewassers erreicht dieses nacheinander die Zustände s3, s4 und s5, während die hierbei entstandenen Teildampfmengen zwischen den einzelnen Verdichterstufen eingespeist, auf den Endzustand verdichtet und in das Niederdruckdampfnetz eingespeist werden. Zur Verringerung der Verdichterar-

Form. 5729 7.78

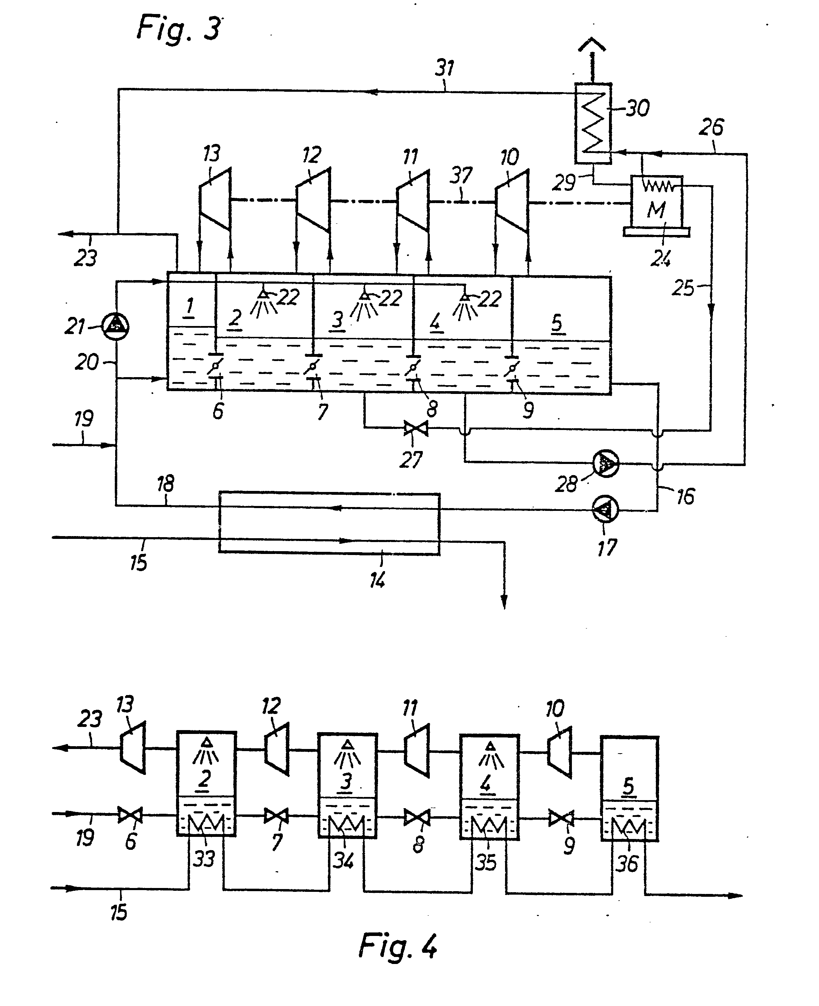

beit und weitgehenden Begrenzung der Verdichtungsendtemperaturen ist nach den einzelnen Verdichterstufen eine Zwischenkühlung vorgesehen (vgl. Figur 3), womit abweichend von den obigen Ausführungen die Verdichtung nacheinander die Zustände d4, d3', d2' und d1' erreicht.

In Figur 3 ist ein Ausführungsbeispiel schematisch dargestellt, in dem unter Ausnutzung der von einem unter geringem Druck stehenden Fluid transportierten, gleitenden Abwärme das aus der Kondensatschiene eines Dampfnetzes stammende Wasser in Dampf umgewandelt und auf das Druckniveau der Niederdruckdampfschiene gehoben wird. Die Bauteile, die den in Figur 1 bereits beschriebenen entsprechen, sind mit denselben Bezugszeichen versehen. Wasser aus der Kondensatschiene wird zusammen mit dem vorgewärmten Kreislaufwasser in einen ersten Kessel 1 geleitet und nach Entspannung in den Ventilen 6, 7, 8 und 9 in die nachgeschalteten Dampfkessel 2, 3, 4 und 5 entspannt. Das Wasser aus Dampfkessel 5 wird auf den Druck der Kondensatschiene gehoben und, wie beschrieben, im Wärmetausch mit dem Fluid erhitzt und erneut mit Wasser aus der Kondensatschiene eingespeist. Der im Dampfkessel 5 erzeugte Dampf wird nach der Kompression in einem Verdichter 10 in den Dampfraum des Dampfkessels 4 eingeleitet, wobei er sich mit dem dort erzeugten Dampf mischt. Dieses Dampfgemisch wird erneut in einem Verdichter 11 komprimiert und in Dampfkessel 3 eingespeist. Durch weitere Verdichter 12 und 13 wird Dampf in gleicher Weise auf höheren Druck gebracht und mit dem Dampf eines Dampfkessels höheren Drucks gemischt, bis der gesamte Dampf den Druck des Niederdruckdampfnetzes besitzt und über Leitung 23 in dieses eingeleitet werden kann. Die Verdichter 10 bis 13 besitzen eine gemeinsame, von einem Dieselmotor 24 angetriebene Welle 37. Eine Kühlwasserzulaufleitung 26 verbindet den Dampfkessel 4 einerseits mit dem Motor 24 und andererseits mit einem Wärmetauscher 30. Über eine Kühlwasserablaufleitung 25 wird das durch die Wärme des Motors erhitzte Wasser in den Dampfkessel 3, in dem das zu verdampfende bzw. zu entspannende Wasser unter höherem Druck steht und eine höhere Temperatur besitzt, als das zur Kühlung des Motors 24 dienende Wasser des Dampfkessels 4, eingeleitet.

Im Wärmetauscher 30 wird die in den Abgasen des Motors 24 enthaltene Abwärme genutzt. Dazu werden die Abgase über eine Leitung 29 in den Wärmetauscher eingeleitet. in dem sie sich gegen verdampfendes Wasser abkühlen. Um den im Wärmetauscher 30 gebildeten Dampf unmittelbar über eine Leitung 31 in das Niederdruckdampfnetz einspeisen zu können, muß der Druck des aus Dampfkessel 4 kommenden Wassers mit Hilfe einer Pumpe 28 erhöht werden. Da auch der Dampfkessel 3 einen niedrigeren Druck als das Niederdruckdampfnetz besitzt, ist es erforderlich, das vom Motor 24 kommende, erhitzte Kühlwasser in einem Ventil 27 zu entspannen.

Über eine von der Kondensatschiene 19 abzweigende Leitung 20 wird Wasser mit Hilfe einer Pumpe 21 gefördert und zu Sprüheinrichtungen 22 in den Dampfkesseln 2, 3 und 4 geleitet, über die Wasser vesprüht und so überhitzter Dampf gesättigt wird.

Das in Figur 4 dargestellte Beispiel unterscheidet sich von dem in Figur 3 abgebildeten nur in der Art der Abwärmeübertragung. Im Beispiel der Figur 4 ist in jedem Dampfkessel 2, 3, 4 und 5 je ein Strömungsquerschnitt 33, 34, 35 und 36 angeordnet. Das durch Leitung 15 geführte Fluid durchfließt diese Strömungsquerschnitte unter kontinuierlicher Abkühlung. In den Dampfkessel 2 wird nur eine Wassermenge eingespeist, die der gleichzeitig in den Dampfkessel 2, 3, 4 und 5 verdampften Wassermenge entspricht.

Bei einer Nutzung der Abwärme von 150°C bis 80°C in einer

0019297

Anlage gemäß Figur 3 kann bei vierstufiger Verdichtung (Stufenwirkungsgrad 0,85) und einer zur Übertragung der Abwärme im Wärmetauscher 14 erforderlichen mittleren Temperaturdifferenz von 10 K ein Verhältnis von erzeugter Nutzwärme, d.h. der bei der Kondensation des erzeugten Dampfes anfallenden Wärme, zur aufgewendeten Verdichterarbeit von 8 . 2 erreicht werden. Wird die zum Antrieb des Verdichters erforderliche Primärenergie mit einem Wirkungsgrad von 40 % (z.B. Diesel) ausgenutzt, so ist zur Erzeugung der Nutzwärme nur ein Primärenergieeinsatz von 30 % erforderlich. Ohne die Abwärmenutzung des Dieselmotors dagegen wäre ein Primärenergieeinsatz von 33 % erforderlich, während bei der unmittelbaren Dampferzeugung in einem Dampfkessel, bedingt durch den Kesselwirkungsgrad, ein Primärenergieeinsatz von über 100 % notwendig ist.

0019297

Patentansprüche

1. Verfahren zum Erzeugen von Dampf mittels sensibler Niedertemperatur-Abwärme eines Fluids, dadurch gekennzeichnet, daß unter erhöhtem Druck stehendes, durch Wärmetausch mit dem Fluid vorgewärmtes Speisewasser in mehreren aufeinanderfolgenden Druckstufen entspannt wird, wobei der in jeder Stufe erzeugte Dampf gesättigt, auf den Druck der nächsthöheren Druckstufe komprimiert und dem Dampf dieser Stufe zugeleitet wird.

2. Verfahren nach Anspruch 1, dadurch gekennzeichnet, daß das auf den niedrigsten Druck entspannte Wasser auf höheren Druck gebracht und nach Wärmetausch mit dem Fluid erneut entspannt wird.

3. Verfahren nach Anspruch 1, dadurch gekennzeichnet, daß das Wasser wenigstens zweier Druckstufen im Wärmetausch mit ungekühltem bzw. dem in einer vorausgegangenen Druckstufe höheren Druckes gekühlten Fluid erhitzt wird.

4. Verfahren nach Anspruch 3, dadurch gekennzeichnet, daß der höchsten Druckstufe eine Wassermenge zugeleitet wird, die der in allen Druckstufen erzeugten Dampfmenge entspricht.

Form. 5729 7.78

BAD ORIGINAL

0019297

5. Verfahren nach einem der Ansprüche 1 bis 4, dadurch gekennzeichnet, daß der in jeder Druckstufe erzeugte Dampf durch Einsprühen von Wasser bis zur Sättigung gekühlt wird.

6. Verfahren nach einem der Ansprüche 1 bis 5, dadurch gekennzeichnet, daß die zur Kompression des in jeder Druckstufe erzeugten Dampfes dienenden Verdichter über eine gemeinsame Welle von einem Antrieb angetrieben werden, wobei als Antrieb eine Gasturbine oder ein Dieselmotor dient, mit dessen Abwärme Dampf erzeugt und/oder Speisewasser für eine Druckstufe vorgewärmt wird.

7. Vorrichtung zur Durchführung des Verfahrens nach einem der Ansprüche 1 bis 6, gekennzeichnet durch mehrere Dampfkessel (1 - 5), wobei in einem Dampfkessel (1) eine Zufuhrleitung (19) und eine Dampfleitung (23) münden und die übrigen Dampfkessel (2 - 5) diesem Dampfkessel (1) in Reihe nachgeschaltet sind und benachbarte Dampfkessel über je einen Verdichter (10 - 13) und eine Entspannungsvorrichtung (6 - 9) miteinander verbunden sind, sowie durch eine oder mehrere Wärmetauschvorrichtungen mit Strömungsquerschnitten für Wasser und Fluid.

8. Vorrichtung nach Anspruch 7, dadurch gekennzeichnet, daß die Dampfkessel selbst als Wärmetauschvorrichtung dienen, wobei in jedem Dampfkessel ein Strömungsquerschnitt für das Fluid angeordnet ist und die Strömungsquerschnitte benachbarter Dampfkessel über eine Leitung miteinander verbunden sind.

9. Vorrichtung nach Anspruch 7, gekennzeichnet durch einen Wärmetauscher mit einem Strömungsquerschnitt für das Fluid und einem Strömungsquerschnitt für Wasser, dessen eines Ende über eine Pumpe mit dem Dampfkessel für das

(1019297

auf niedrigsten Druck entspannte Wasser und dessen anderes Ende mit der Zufuhrleitung verbunden ist.

10. Vorrichtung nach einem der Ansprüche 7 bis 9, dadurch gekennzeichnet, daß alle Verdichter über eine gemeinsame Welle miteinander verbunden sind, die von einem Dieselmotor angetrieben wird, dessen Kühlwasserzulaufleitung und -ablaufleitung mit je einem der Dampfkessel verbunden sind und dessen Auspuffleitung einen Strömungsquerschnitt eines Wärmetauschers bildet, der einen weiteren mit der Dampfleitung in Verbindung stehenden Strömungsquerschnitt besitzt.

Form. 5729 7.78

0019297

Fig. 1

Fig. 2

0019297

**Fig. 3**

**Fig. 4**